# EUROPÄISCHE PATENTSCHRIFT

(11) **EP 3 808 586 B1**
(45) Veröffentlichungstag und Bekanntmachung des Hinweises auf die Patenterteilung: **15.06.2022**
(21) Anmeldenummer: 20196340.2
(22) Anmeldetag: 23.10.2018
(51) Int. Cl.: B60K 6/387, B60K 6/442, B60K 6/36

(54) **HYBRID-ANTRIEBSSTRANG MIT ZWEI ELEKTRISCHEN MASCHINEN UND EINER VERBRENNUNGSKRAFTMASCHINE**
HYBRID DRIVE TRAIN WITH TWO ELECTRIC MACHINES AND A COMBUSTION ENGINE
CHAINE CINÉMATIQUE HYBRIDE POURVUE DE DEUX MACHINES ÉLECTRIQUES ET D'UN MOTEUR À COMBUSTION INTERNE

(30) Priorität: 23.11.2017 DE 102017127695
(43) Veröffentlichungstag der Anmeldung: 21.04.2021
(62) Teilanmeldung aus: 18800846.0
(73) Patentinhaber: Volkswagen Aktiengesellschaft, 38440 Wolfsburg (DE)
(72) Erfinder: Trinkenschuh, Andreas, 77815 Bühl (DE); Lehmann, Steffen, 76275 Ettlingen (DE); Müller, Frank, 38165 Esssenrode (DE)

(56) Entgegenhaltungen:
- EP-A2- 2 578 428
- WO-A1-2006/034520
- WO-A1-2011/054097
- US-A1- 2006 102 409

## Beschreibung

Die Erfindung betrifft einen Antriebsstrang für ein Hybridkraftfahrzeug, mit einer Getriebeeingangswelle, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht.

Aus dem Stand der Technik sind bereits Antriebseinrichtungen für Hybridfahrzeuge bekannt. Zum Beispiel offenbart die DE 10 2015 222 691 A1 eine Antriebseinrichtung und ein Verfahren zum Steuern der Antriebseinrichtung eines Hybridfahrzeuges, die eine Verbrennungskraftmaschine, eine erste Elektromaschine, eine zweite Elektromaschine und einen Akkumulator umfasst.

Auch offenbart die DE 10 2015 222 690 A1 eine Antriebseinrichtung und ein Verfahren zum Steuern der Antriebseinrichtung eines Hybridfahrzeuges, die eine Verbrennungskraftmaschine, eine erste Elektromaschine, eine zweite Elektromaschine und einen Akkumulator umfasst, wobei die Antriebseinrichtung zum Antrieb des Hybridfahrzeuges in den folgenden drei Betriebsmodi betreibbar ist: einem rein elektrischen Betrieb, in dem ein Fahrantriebsdrehmoment mittels der zweiten Elektromaschine bewirkt wird, während die Verbrennungskraftmaschine ausgeschaltet ist; einem seriellen Hybridbetrieb, in dem das Fahrantriebsdrehmoment mittels der zweiten Elektromaschine bewirkt wird und die Verbrennungskraftmaschine die erste Elektromaschine zur Erzeugung von elektrischer Energie antreibt; einem parallelen Hybridbetrieb, in dem ein Fahrantriebsdrehmoment mittels der Verbrennungskraftmaschine bewirkt wird, wobei das Verfahren aufweist: Steuern der Antriebseinrichtung im seriellen Hybridbetrieb derart, dass die Verbrennungskraftmaschine an einem Arbeitspunkt basierend auf einem kombinierten Wirkungsgrad betrieben wird, der von dem Wirkungsgrad der Verbrennungskraftmaschine und von dem Wirkungsgrad der ersten Elektromaschine abhängt. Unter anderem offenbart auch die DE 10 2015 222 692 A1 eine Antriebseinrichtung und ein Verfahren zum Betreiben der Antriebseinrichtung eines Hybridfahrzeuges zum Antreiben eines Antriebsrads, wobei die Antriebseinrichtung eine Verbrennungskraftmaschine, eine mit der Verbrennungskraftmaschine gekoppelte erste Elektromaschine, eine zweite Elektromaschine, einen elektrischen Akkumulator und eine Hauptkupplung zwischen der Verbrennungskraftmaschine und dem Antriebsrad umfasst, wobei das Verfahren aufweist: Betreiben der Antriebseinrichtung in einem ersten Betriebsmodus der folgenden drei Betriebsmodi: einem rein elektrischen Betrieb, in dem ein auf das Antriebsrad wirkendes Fahrantriebsdrehmoment mittels der zweiten Elektromaschine bewirkt wird, während die Verbrennungskraftmaschine ausgeschaltet ist; einem seriellen Hybridbetrieb, in dem die Verbrennungskraftmaschine die erste Elektromaschine zur Erzeugung von elektrischer Energie antreibt, welche von der zweiten Elektromaschine verwendet wird, um das Fahrantriebsdrehmoment zu bewirken; einem parallelen Hybridbetrieb, in dem das Fahran-triebsdrehmoment mittels der Verbrennungskraftmaschine bewirkt wird; und zumindest einmal Wechseln von dem ersten Betriebsmodus in einen zweiten Betriebsmodus der drei Betriebsmodi, wobei das während des Wechsels von dem ersten Betriebsmodus in den zweiten Betriebsmodus bereitgestellte Fahrantriebsdrehmoment einem geeignet wählbaren Verlauf zwischen dem vor und nach dem Wechsel bereitgestellten Fahrantriebsdrehmoment entspricht.

Zusätzlich offenbart die DE 10 2015 222 694 A1 eine Antriebseinrichtung und ein Verfahren zum Betreiben der Antriebseinrichtung eines Hybridfahrzeuges zum Antreiben eines Antriebsrades, wobei die Antriebseinrichtung eine Verbrennungskraftmaschine, eine mit der Verbrennungskraftmaschine gekoppelte erste Elektromaschine, eine mit dem Antriebsrad koppelbare zweite Elektromaschine sowie einen elektrischen Akkumulator umfasst und ferner eine Hauptkupplung und ein Getriebe umfasst, die zwischen der Verbrennungskraftmaschine und dem Antriebsrad angeordnet sind, wobei das Verfahren aufweist: während ein erster Gang des Getriebes eingelegt ist, Betreiben der Verbrennungskraftmaschine bei einer ersten Drehzahl für den ersten Gang in einem parallelen Hybridbetrieb, in dem bei geschlossener Hauptkupplung ein auf das Antriebsrad wirkendes Fahrantriebsdrehmoment mittels der Verbrennungskraftmaschine erzeugt wird; Wechseln in einen seriellen Hybridbetrieb, in dem die Verbrennungskraftmaschine die erste Elektromaschine zur Erzeugung von elektrischer Energie antreibt, welche von der zweiten Elektromaschine verwendet wird, um das Fahrantriebsdrehmoment zu bewirken; Öffnen der Hauptkupplung; Einstellen einer Drehzahl der Verbrennungskraftmaschine bei geöffneter Hauptkupplung auf eine zweite Drehzahl für einen zweiten Gang des Getriebes in dem parallelen Hybridbetrieb; Einlegen des zweiten Ganges des Getriebes; Schließen der Hauptkupplung; und Wechseln in den parallelen Hybridbetrieb, während der zweite Gang eingelegt ist.

In der US 2006/102409 A1 ist ein Antriebsstrang für ein Hybridkraftfahrzeug gezeigt. Der Antriebsstrang weist eine Getriebeeingangswelle auf, die über einen ersten Teilantriebsstrang mit einer ersten elektrischen Maschine und einer Verbrennungskraftmaschine zur Drehmomentübertragung in Wirkbeziehung steht und die über einen zweiten Teilantriebsstrang mit einer zweiten elektrischen Maschine zur Drehmomentübertragung in Wirkbeziehung steht. Die zweite elektrische Maschine ist dauerhaft mit der Getriebeeingangswelle drehmomentübertragend verbunden. Die erste elektrische Maschine und die Verbrennungskraftmaschine sind koppelbar zur Drehmomentübertragung mit der Getriebeeingangswelle verbindbar. Die erste elektrische Maschine und die zweite elektrische Maschine sind koaxial zueinander angeordnet, wobei eine Abtriebswelle der ersten elektrischen Maschine radial innerhalb einer Abtriebswelle der zweiten elektrischen Maschine angeordnet ist. Die Abtriebswelle der ersten elektrischen Maschine und die Abtriebswelle der zweiten elektrischen Maschine sind jeweils mittels zweier Lager an einem Gehäuse gelagert. Das Gehäuse ist dazu teilweise zwischen der Abtriebswelle der ersten elektrischen Maschine und der Abtriebswelle der zweiten elektrischen Maschine ausgebildet. Ein mit der Verbrennungskraftmaschine gekoppelter Antriebsflansch ist mittels einer Keilwellen-Verbindung drehfest mit der Abtriebswelle der ersten elektrischen Maschine verbunden.

Die WO 2011/054097 A1 offenbart einen Antriebsstrang für ein Hybridkraftfahrzeug mit einer Verbrennungskraftmaschine, einer ersten elektrischen Maschine und einer zweiten elektrische Maschine. Eine Antriebswelle der Verbrennungskraftmaschine und eine Abtriebswelle der ersten elektrischen Maschine sind einteilig ausgeführt. Diese Antriebswelle der Verbrennungskraftmaschine weist dabei eine ähnliche Funktion wie ein mit der Verbrennungskraftmaschine gekoppelter Antriebsflansch auf. Die zweite elektrische Maschine ist dauerhaft mit einer Getriebeeingangswelle drehmomentübertragend verbunden. Die erste elektrische Maschine und die Verbrennungskraftmaschine sind koppelbar zur Drehmomentübertragung mit der Getriebeeingangswelle verbindbar. Die erste elektrische Maschine und die zweite elektrische Maschine sind koaxial zueinander angeordnet, wobei die Abtriebswelle der ersten elektrischen Maschine radial innerhalb einer Abtriebswelle der zweiten elektrischen Maschine angeordnet ist. Die Abtriebswelle der ersten elektrischen Maschine bzw. die Antriebswelle der Verbrennungskraftmaschine und die Abtriebswelle der zweiten elektrischen Maschine sind jeweils mithilfe von Lagern an einem Gehäuse gelagert.

Aus der EP 2 578 428 A2 ist ein Antriebsstrang für ein Hybridkraftfahrzeug mit einer Verbrennungskraftmaschine, einer ersten elektrische Maschine und einer zweiten elektrischen Maschine bekannt. Die erste elektrische Maschine und die zweite elektrische Maschine sind koaxial zueinander angeordnet, wobei die Abtriebswelle der ersten elektrischen Maschine neben einer Abtriebswelle der zweiten elektrischen Maschine angeordnet ist, wobei eine Stirnseite der Abtriebswelle der ersten elektrischen Maschine mit einer Stirnseite der Abtriebswelle der zweiten elektrischen Maschine mittels einer Kupplung koppelbar ist. Ein mit der Verbrennungskraftmaschine gekoppelter Antriebsflansch ist axial versetzt zu der Abtriebswelle der ersten elektrischen Maschine angeordnet. Der Antriebsflansch und die Abtriebswelle der ersten elektrischen Maschine sind mittels eines Getriebes, insbesondere eines Riemens, einer Kette oder eines Zahnradsatzes, gekoppelt.

Der Stand der Technik hat jedoch immer den Nachteil, dass ein Antriebsstrang eines Hybridfahrzeugs mit zwei elektrischen Maschinen und einer Verbrennungskraftmaschine sehr bauraumintensiv, insbesondere hinsichtlich der axialen Gesamtlänge, und sehr kostenintensiv durch die große Anzahl an benötigten Bauteilen, wie beispielsweise Zahnrädern, Zahnradpaarungen, Lagern und Wellen, ist.

Es ist also die Aufgabe der Erfindung, die Nachteile aus dem Stand der Technik zu vermeiden oder wenigstens zu verringern. Insbesondere soll ein Antriebsstrang für ein Hybridfahrzeug mit zwei elektrischen Maschinen und einer Verbrennungskraftmaschine entwickelt werden, der sowohl bauraumsparend als auch kostengünstig umgesetzt werden kann.

Die Aufgabe der Erfindung wird durch die Merkmale des Patentanspruchs 1 gelöst. Die zweite elektrische Maschine ist dauerhaft, d.h. permanent/fest/nicht koppelbar, mit der Getriebeeingangswelle drehmomentübertragend verbunden, wobei die erste elektrische Maschine und die Verbrennungskraftmaschine koppelbar, d.h. selektiv schaltbar, zur Drehmomentübertragung mit der Getriebeeingangswelle verbindbar sind. Das heißt also, dass die im Stand der Technik beschriebenen Kupplungen K1 und K2, die die Verbrennungskraftmaschine mit der ersten elektrischen Maschine bzw. die zweite elektrische Maschine mit der Getriebeeingangswelle koppelbar verbinden, entfallen. Dies hat den Vorteil, dass dadurch die Anzahl an benötigten Bauteilen erheblich reduziert werden kann, was sich günstig auf die Gesamtkosten auswirkt. Zudem sind die erste elektrische Maschine und die zweite elektrische Maschine koaxial zueinander angeordnet und eine Abtriebswelle der ersten elektrischen Maschine radial innerhalb einer Abtriebswelle der zweiten elektrischen Maschine angeordnet ist. Hierbei ist die Abtriebswelle der ersten elektrischen Maschine über ein Lager auf der Abtriebswelle der zweiten elektrischen Maschine gelagert.

Die erste elektrische Maschine ist mit der Verbrennungskraftmaschine drehmomentübertragend über eine erste Übersetzungsstufe verbunden. Die erste Übersetzungsstufe ist durch eine Verzahnung an einem Antriebsflansch der Verbrennungskraftmaschine und eine Verzahnung an einer Abtriebswelle der ersten elektrischen Maschine ausgebildet, wobei die Verzahnung des Antriebsflanschs als ein innerverzahntes Hohlrad ausgebildet ist.

Vorteilhafte Ausführungsformen sind in den Unteransprüchen beansprucht und werden nachfolgend näher erläutert.

Vorteilhaft ist ein Rotor der zweiten elektrischen Maschine über ein erstes Lager und ein zweites Lager in dem Getriebegehäuse gelagert.

Außerdem ist es von Vorteil, wenn eine schaltbare Kupplung zwischen dem zweiten Teilantriebsstrang mit der zweiten elektrischen Maschine und dem ersten Teilantriebsstrang mit der ersten elektrischen Maschine und der Verbrennungskraftmaschine angeordnet ist. Mit anderen Worten wird also die Trennkupplung (K0) zwischen den beiden elektrischen Maschinen angeordnet, was vorteilhafterweise eine kompakte Ausgestaltung des Antriebsstrangs und damit eine Reduzierung der Gesamtaxiallänge ermöglicht. Außerdem reduziert sich dadurch das zu übertragende Drehmoment an der Trennkupplung, was in vorteilhafter Weise eine kompaktere Auslegung der Trennkupplung mit einem niedrigeren Bauraumbedarf ermöglicht.

Weiterhin ist es vorteilhaft, wenn nur eine Kupplung in dem Antriebsstrang angeordnet ist. Das heißt also, dass die Kupplungen zwischen der Verbrennungskraftmaschine und der ersten elektrischen Maschine und zwischen der zweiten elektrischen Maschine und der Getriebeeingangswelle ersatzlos wegfallen. Dadurch wird vorteilhafterweise eine Reduzierung an benötigten Bauteilen erreicht.

Zudem ist es von Vorteil, wenn die erste elektrische Maschine dauerhaft, d.h. permanent, mit der Verbrennungskraftmaschine drehmomentübertragend verbunden ist. So kann die Kupplung zwischen der Verbrennungskraftmaschine und der ersten elektrischen Maschine entfallen. Dies ist nur dann bevorzugt, wenn das Hybridfahrzeug in keinem Betriebszustand allein durch die erste elektrische Maschine zum elektrischen Fahren angetrieben wird.

Auch zeichnet sich ein günstiges Ausführungsbeispiel dadurch aus, dass nur eine (erste) Übersetzungsstufe zwischen der Verbrennungskraftmaschine und der ersten elektrischen Maschine ausgebildet ist.

Insbesondere ist es also von Vorteil, wenn die Verbrennungskraftmaschine achsparallel zu der ersten elektrischen Maschine und/oder der zweiten elektrischen Maschine angeordnet ist. So ist zum einen nur eine gemeinsame Übersetzungsstufe notwendig und zum anderen eine Dreh-momentübersetzung eines Antriebsflanschs der Verbrennungskraftmaschine auf die Abtriebswelle der ersten elektrischen Maschine und/oder der zweiten elektrischen Maschine möglich.

Besonders bevorzugt ist es dabei, wenn die Übersetzungsstufe zwischen der Verbrennungskraftmaschine und der ersten elektrischen Maschine und/oder der zweiten elektrischen Maschine ausgehend von der Verbrennungskraftmaschine als ein treibendes Element und die beiden elektrischen Maschine als ein getriebenes Element als eine Übersetzung ins Schnelle (i < 1 ) ausgebildet ist. Eine Übersetzung ins Langsame ist in einer alternativen Ausführungsform auch möglich.

Zudem ist es vorteilhaft, wenn eine weitere (zweite) Übersetzungsstufe zwischen der Abtriebswelle der zweiten elektrischen Maschine und der Getriebeeingangswelle bzw. einer Vorgelegewelle vorhanden ist. So kann das Drehmoment des ersten Teilantriebsstrangs und/oder des zweiten Teilantriebsstrangs übersetzt an ein Getriebe weitergegeben werden. Insbesondere ist es bevorzugt, wenn die zweite Übersetzungsstufe ausgehend von der Abtriebswelle der zweiten elektrischen Maschine als ein treibendes Element und der Vorgelegewelle als ein getriebenes Element als eine Übersetzung ins Langsame (i > 1 ) ausgebildet ist. Eine Übersetzung ins Schnelle ist in einer alternativen Ausführungsform auch möglich.

Außerdem ist es zweckmäßig, wenn eine weitere (dritte) Übersetzungsstufe zwischen der Vorgelegewelle und einem Differential vorhanden ist. So kann das Drehmoment der Vorgelegewelle übersetzt an das Differential weitergegeben werden.

Insbesondere ist es bevorzugt, wenn die dritte Übersetzungsstufe ausgehend von der Vorgelegewelle als ein treibendes Element und dem Differential als ein getriebenes Element als eine Übersetzung ins Langsame (i > 1 ) ausgebildet ist.

Ferner ist es vorteilhaft, wenn die erste elektrische Maschine und die zweite elektrische Maschine in Axialrichtung auf der einen Seite der (ersten) Übersetzungsstufe bzw. der (zweiten) Übersetzungsstufe und die Verbrennungskraftmaschine in Axialrichtung auf der anderen Seite der (ersten) Übersetzungsstufe bzw. der (zweiten) Übersetzungsstufe angeordnet sind.

Auch ist es bevorzugt, wenn die erste elektrische Maschine und/oder die zweite elektrische Maschine gekühlt sind. Besonders ist es bevorzugt, wenn die Kühlung mittels einer Wasserkühlung aus einem Fahrzeug-Kühlkreis oder mittels einer Ölkühlung mit Getriebeöl aus dem Getriebe heraus ausgebildet ist.

Ferner ist es zweckmäßig, wenn die erste elektrische Maschine und/oder die zweite elektrische Maschine sowohl als eine Traktionsmaschine im motorischen Betrieb als auch als ein Generator im generatorischen Betrieb einsetzbar sind/ist. Dadurch ist es möglich, den Antriebsstrang in verschiedenen Betriebsmodi zu verwenden.

Auch ist es zweckmäßig, wenn ein Dämpfer zwischen der Verbrennungskraftmaschine und der ersten und/oder der zweiten elektrischen Maschine angeordnet ist. So können vorteilhafterweise Schwingungen ausgeglichen und Resonanzen beeinflusst werden.

Zudem ist es von Vorteil, wenn eine Rutschkupplung zwischen der Verbrennungskraftmaschine und der ersten und/oder der zweiten elektrischen Maschine angeordnet ist. So kann der Antriebsstrang vor einer Überlast geschützt werden. Außerdem ist es vorteilhaft, wenn eine Parksperre zum Feststellen der Getriebeeingangswelle in einem geparkten Zustand des Kraftfahrzeugs, vorzugsweise mittels einer formschlüssigen Verbindung mit der Vorgelegewelle, vorhanden ist. Bevorzugt ist es auch, wenn die Parksperre elektromechanisch oder mechanisch betätigt wird.

Weiterhin zeichnet sich ein günstiges Ausführungsbeispiel dadurch aus, dass die Trennkupplung als eine vorzugsweise ölgekühlte Lamellenkupplung ausgebildet ist. Auch ist es vorteilhaft, wenn die Trennkupplung als eine Klauenkupplung ausgebildet ist. Es ist auch möglich, die Trennkupplung als eine elektromagnetische Kupplung auszubilden.

Ferner ist es von Vorteil, wenn die Trennkupplung durch ein Zentralausrücksystem betätigbar ist. Dabei kann das Zentralausrücksystem hydraulisch, mechanisch oder elektromechanisch aktuiert werden. Zusätzlich ist es zweckmäßig, wenn die Trennkupplung durch eine hydraulische Drehdurchführung betätigbar ist.

Außerdem ist es vorteilhaft, wenn die Trennkupplung als normally-closed, normally-open oder normally-stay Kupplung ausgeführt ist.

Auch ist es von Vorteil, wenn der Antriebsstrang den Betrieb in einem ersten Betriebsmodus ermöglicht, in dem die Getriebeeingangswelle rein elektrisch angetrieben wird und eine Rekuperation ermöglicht ist. In dem erstem Betriebsmodus ist die Trennkupplung geöffnet und die erste elektrische Maschine und die Verbrennungskraftmaschine, also der erste Teilantriebsstrang, von der Getriebeeingangswelle abgekoppelt. So wird als nur die zweite elektrische Maschine als Antriebsmaschine eingesetzt. Die zweite elektrische Maschine wird also als Traktionsmaschine (beim elektrischen Fahren/Antreiben) und als Generator (bei der Rekuperation beim Bremsen) eingesetzt. Auch ist es vorteilhaft, wenn der Antriebsstrang den Betrieb in einem zweiten Betriebsmodus ermöglicht, in dem ein serieller Hybridbetrieb ausgeführt wird. Das heißt, dass die zweite elektrische Maschine als Traktionsmaschine für die Getriebeeingangswelle wirkt und die Verbrennungskraftmaschine die erste elektrische Maschine zur Erzeugung elektrischer Energie antreibt. In dem zweiten Betriebsmodus ist die Trennkupplung geöffnet.

Ferner ist es zweckmäßig, wenn der Antriebsstrang den Betrieb in einem dritten Betriebsmodus ermöglicht, in dem ein paralleler Hybridbetrieb ausgeführt wird. Das heißt, dass die Verbrennungskraftmaschine und zusätzlich die erste und/oder die zweite elektrische Maschine ein Drehmoment auf die Getriebeeingangswelle aufbringt. Die Trennkupplung ist also geschlossen.

Es ist also von Vorteil, wenn der Antriebsstrang so ausgebildet, dass ein Betrieb in einem ersten Betriebsmodus zum rein elektrischen Antreiben, in dem die Kupplung geöffnet ist und nur die zweite elektrische Maschine als Antriebsmaschine für die Getriebeeingangswelle wirkt, und/oder in einem zweiten Betriebsmodus zum seriellen Hybridantrieb, in dem die Kupplung geöffnet ist, die zweite elektrische Maschine als Antriebsmaschine für die Getriebeeingangswelle wirkt und die Verbrennungskraftmaschine als Antriebsmaschine für die erste elektrische Maschine zum Erzeugen elektrischer Energie wirkt, und/oder in einem dritten Betriebsmodus zum parallelen Hybridantrieb, in dem die Verbrennungskraftmaschine und zusätzlich die erste elektrische Maschine und/oder die zweite elektrische Maschine als Antriebsmaschine für die Getriebeeingangswelle wirkt, ermöglicht ist.

Die Erfindung wird nachfolgend mit Hilfe von Zeichnungen erläutert. Es zeigen:
Fig. 1 zeigt eine Prinzipdarstellung eines Antriebsstrangs für ein Hybridkraftfahrzeug,
Fig. 2 zeigt eine schematische Darstellung eines erfindungsgemäßen Antriebsstrangs mit einer ersten Lagerausführung,
Fig. 3 zeigt eine schematische Darstellung eines erfindungsgemäßen Antriebsstrangs mit einer zweiten Lagerausführung,
Fig. 4 zeigt eine Längsschnittdarstellung des Antriebsstrangs aus Fig. 3, und
Fig. 5 zeigt eine zur Fig. 4 vergrößerte Längsschnittdarstellung eines Teils des Antriebsstrangs.

Die Zeichnungen sind lediglich schematischer Natur und dienen ausschließlich dem Verständnis der Erfindung. Die gleichen Elemente sind mit denselben Bezugszeichen gekennzeichnet.

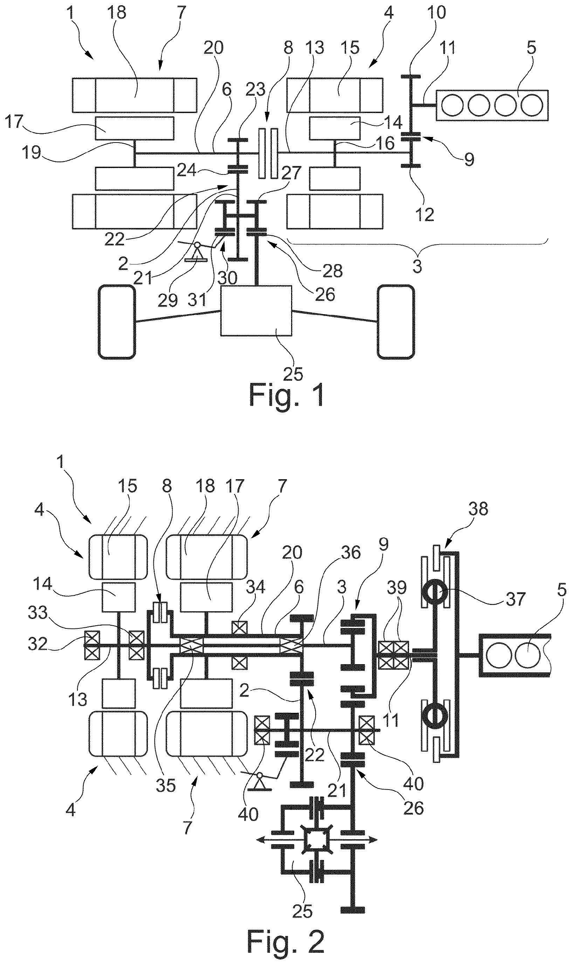

Fig. 1 zeigt eine Prinzipdarstellung eines Antriebsstrangs 1 für ein Hybridkraftfahrzeug. In dem Antriebsstrang 1 steht eine Getriebeeingangswelle 2 über einen ersten Teilantriebsstrang 3 mit einer ersten elektrischen Maschine (E-Maschine) 4 und einer Verbrennungskraftmaschine (VKM) 5 zur Drehmomentübertragung koppelbar in Wirkbeziehung. Die Getriebeeingangswelle 2 steht über einen zweiten Teilantriebsstrang 6 mit einer zweiten elektrischen Maschine (E-Maschine) 7 dauerhaft in Wirkbeziehung. Die zweite elektrische Maschine 7 ist in jedem Betriebszustand mit der Getriebeeingangswelle 2 verbunden, während die erste elektrische Maschine 4 und die Verbrennungskraftmaschine 5 über eine Kupplung/Trennkupplung 8 von der Getriebeeingangswelle 2 abgekoppelt werden können.

Der erste Teilantriebsstrang 3 ist also über die Trennkupplung 8 mit dem zweiten Teilantriebsstrang 6 und damit mit der Getriebeeingangswelle 2 zur Drehmomentübertragung verbindbar. Die erste elektrische Maschine 4 ist koaxial zu der zweiten elektrischen Maschine 7 angeordnet. Die Verbrennungskraftmaschine 5 ist achsparallel zu der ersten elektrischen Maschine 4 und der zweiten elektrischen Maschine 7 angeordnet. Die Verbrennungskraftmaschine 5 ist dauerhaft, d.h. nicht abkoppelbar, mit der ersten elektrischen Maschine 4 über eine erste Übersetzungsstufe (ii) 9 drehmomentübertragend verbunden. Die erste Übersetzungsstufe 9 wird durch eine Verzahnung 10 an einem Antriebsflansch 11 der Verbrennungskraftmaschine 5 und einer Verzahnung 12 an einer Abtriebswelle 13 der ersten elektrischen Maschine 4 ausgebildet. Die erste Übersetzungsstufe 9 ist ausgehend von der Verbrennungskraftmaschine 5 eine Übersetzung ins Schnelle, d.h. ii < 1. Die Abtriebswelle 13 kann auch als Antriebswelle fungieren, wenn die erste elektrische Maschine 4 in einem generatorischen Betrieb eingesetzt wird. Jedoch wird die Ab-/Antriebswelle 13 der ersten elektrischen Maschine 4 der Einfachheit halber im Folgenden als Abtriebswelle 13 bezeichnet.

Die erste elektrische Maschine 4 weist einen Rotor 14 und einen konzentrisch und radial außerhalb dazu angeordneten Stator 15 auf. Der Rotor 14 ist über einen Rotorträger 16 mit der Abtriebswelle 13 der ersten elektrischen Maschine 4 fest verbunden.

Die Abtriebswelle 13 ist drehfest mit einem Teil der Trennkupplung 8 verbunden.

Die zweite elektrische Maschine 7 weist einen Rotor 17 und einen konzentrisch und radial außerhalb dazu angeordneten Stator 18 auf. Der Rotor 17 ist über einen Rotorträger 19 mit einer Abtriebswelle 20 der zweiten elektrischen Maschine 7 fest verbunden. Die Abtriebswelle 20 kann auch als Antriebswelle fungieren, wenn die zweite elektrische Maschine 7 in einem generatorischen Betrieb eingesetzt wird. Jedoch wird die Ab-/Antriebswelle 20 der zweiten elektrischen Maschine 7 der Einfachheit halber im Folgenden als Abtriebswelle 20 bezeichnet. Die Abtriebswelle 20 der zweiten elektrischen Maschine 7 ist drehfest mit einem anderen Teil der Trennkupplung 8 verbunden, so dass die Abtriebswelle 20 der zweiten elektrischen Maschine 7 bei geschlossener Trennkupplung 8 drehfest mit der Abtriebswelle 13 der ersten elektrischen Maschine 4 gekoppelt ist.

Die Abtriebswelle 20 der zweiten elektrischen Maschine 7 ist dauerhaft, d.h. nicht abkoppelbar, mit der Getriebeeingangswelle 2 bzw. mit einer Vorgelegewelle 21 über eine zweite Übersetzungsstufe (12) 22 drehmomentübertragend verbunden. Die zweite Übersetzungsstufe 22 wird durch eine Verzahnung 23 an der Abtriebswelle 20 der zweiten elektrischen Maschine 7 und eine Verzahnung 24 an der Vorgelegewelle 21 ausgebildet. Die zweite Übersetzungsstufe 22 ist ausgehend von der Abtriebswelle 20 der zweiten elektrischen Maschine 7 eine Übersetzung ins Langsame, d.h. i2 > 1.

Die Vorgelegewelle 21 ist mit einem Differential 25 über eine dritte Übersetzungsstufe (h) 26 drehmomentübertragend verbunden. Die dritte Übersetzungsstufe 26 wird durch eine Verzahnung 27 an der Vorgelegewelle 21 und eine Verzahnung 28 an dem Differential 25 ausgebildet. Die dritte Übersetzungsstufe 26 ist ausgehend von der Vorgelegewelle 21 eine Übersetzung ins Langsame, d.h. h > 1. Eine Parksperre 29 ist über eine formschlüssige Verbindung 30 mit der Vorgelegewelle 21 bzw. mit einer integrierten Verzahnung 31 an der Vorgelegewelle 21 ausgebildet.

Fig. 2 zeigt eine schematische Darstellung eines erfindungsgemäßen Antriebsstrangs 1. Der Rotor 14 der ersten elektrischen Maschine 4 ist über ein ersten Lager 32 und ein zweites Lager 33 in einem nicht dargestellten Getriebegehäuse gelagert. Der Rotor 17 der zweiten elektrischen Maschine 4 ist über ein erstes Lager 34 in dem Getriebegehäuse und über ein zweites Lager 35 auf der Abtriebswelle 13 der ersten elektrischen Maschine 4 gelagert. Die Abtriebswelle 20 ist über ein weiteres Lager 36 auf der Abtriebswelle 13 gelagert. Die Abtriebswelle 20 der zweiten elektrischen Maschine 7 ist als eine Hohlwelle ausgebildet, in der die Abtriebswelle 13 der ersten elektrischen Maschine 4 radial innerhalb angeordnet ist. Die erste elektrische Maschine 4 ist in Axialrichtung auf einer verbrennungsmaschinenabgewandten Seite der zweiten elektrischen Maschine 7 angeordnet. Die Trennkupplung 8 ist in Axialrichtung zwischen der ersten elektrischen Maschine 4 und der zweiten elektrischen Maschine 7 angeordnet. Die Trennkupplung 8 ist in Axialrichtung auf der verbrennungsmaschinenabgewandten Seite der zweiten elektrischen Maschine 7 angeordnet.

Die erste Übersetzungsstufe 9 ist in Axialrichtung zwischen der Verbrennungskraftmaschine 5 und der zweiten elektrischen Maschine 7 und damit auch zwischen der Verbrennungskraftmaschine 5 und der ersten elektrischen Maschine 4 angeordnet.

Die zweite Übersetzungsstufe 22 ist in Axialrichtung zwischen der ersten Übersetzungsstufe 9 und der zweiten elektrischen Maschine 7 angeordnet. Das Lager 36 in Axialrichtung auf Höhe der zweiten Übersetzungsstufe 22 angeordnet. Die Verbrennungskraftmaschine 5 ist über einen Dämpfer 37 und eine Rutschkupplung 38 an der Abtriebswelle 13 der ersten elektrischen Maschine 4 angebunden. Der Antriebsflansch 11 der Verbrennungskraftmaschine 5 ist über zwei Lager 39 im Getriebegehäuse gelagert. Die Verzahnung 10 des Antriebsflanschs 11 ist alles innerverzahntes Hohlrad ausgebildet. Die Verzahnung 12 der Abtriebswelle 13 sowie die Verzahnung 23 der Abtriebswelle 20 sind jeweils als ein außenverzahntes Stirnrad ausgebildet. Die Vorgelegewelle 21 ist über zwei Lager 40 in dem Getriebegehäuse gelagert. Die Verzahnungen 24, 27 der Vorgelegewelle 21 sind jeweils als ein außenverzahntes Stirnrad ausgebildet. Die Verzahnung 28 des Differentials 25 ist als ein außenverzahntes Stirnrad ausgebildet.

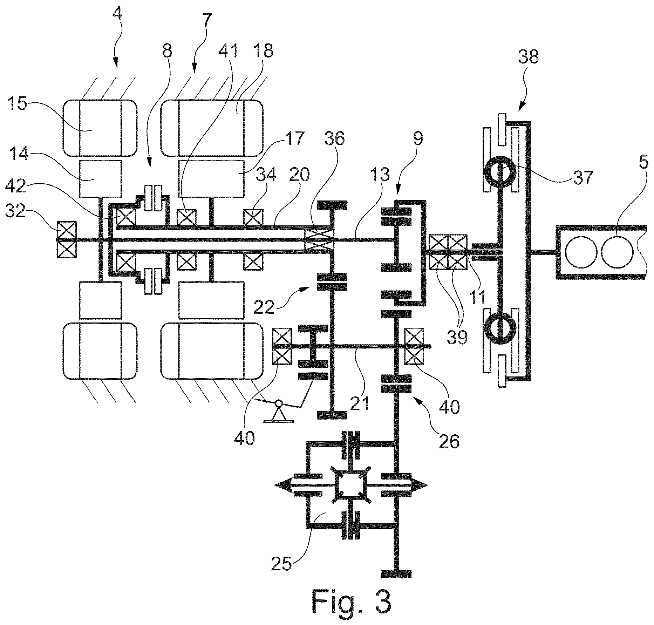

Fig. 3 zeigt eine alternative Lagerung der Abtriebswelle 13 und der Abtriebswelle 20. Die übrigen Merkmale entsprechen denen aus Fig. 2 und werden einfachheitshalber nicht erneut beschrieben. Der Rotor 17 der zweiten elektrischen Maschine 7 ist über das erste Lager 34 und ein zweites Lager 41 in dem Getriebegehäuse gelagert. Der Rotor 14 der ersten elektrischen Maschine 4 ist über das erste Lager 32 in dem Getriebegehäuse und über ein zweites Lager 42 auf der Abtriebswelle 20 der zweiten elektrischen Maschine 7 gelagert. Die Abtriebswelle 13 ist über das weitere Lager 36 auf der Abtriebswelle 20 gelagert.

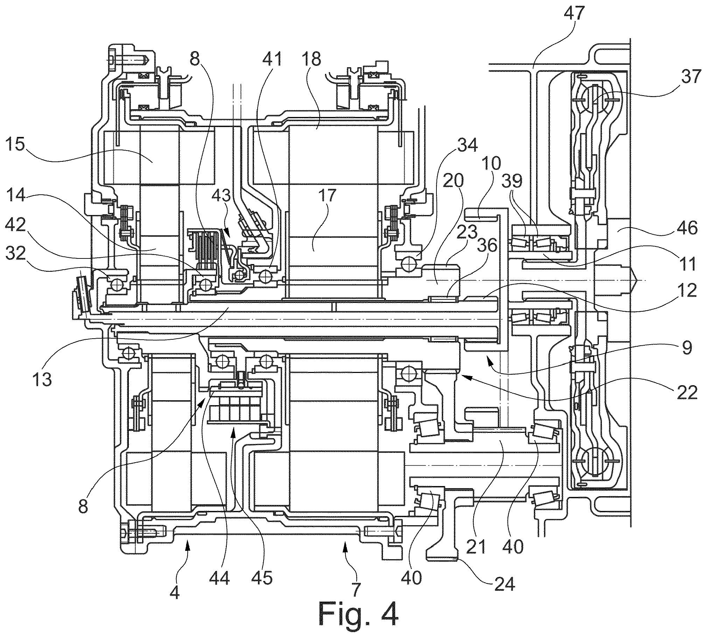

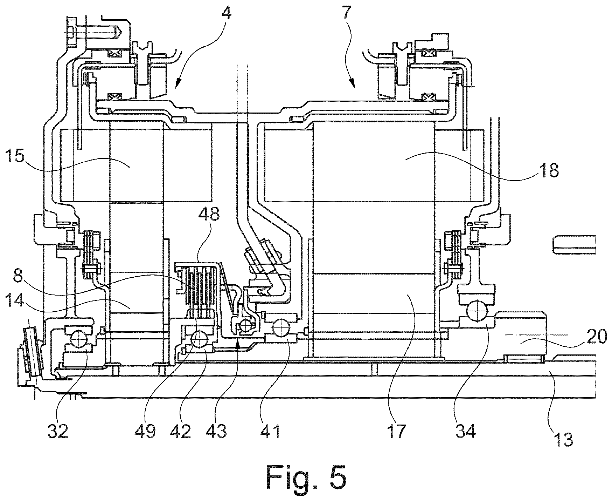

Fig. 4 und 5 zeigen eine Längsschnittdarstellung des Antriebsstrangs 1. Die Trennkupplung 8 ist dabei in einer Ausführungsform als eine Lamellenkupplung ausgebildet, die über einen hydraulischen Zentralausrücker 43 betätigt wird. In einer anderen Ausführungsform ist die Trennkupplung 8 als eine Klauenkupplung ausgebildet, bei der eine Schiebemuffe 44 durch einen Elektromotor 45 elektromotorisch verfahren werden kann, um die Trennkupplung 8 zu öffnen oder zu schließen.

Die Verbrennungskraftmaschine 5 ist über einen Kurbelwellenflansch 46 und über den Dämpfer 37, der als ein Torsionsschwingungsdämpfer ausgebildet ist, mit dem Antriebsflansch 11 verbunden. In den Fign. 4 und 5 ist auch ein Getriebegehäuse 47 dargestellt, in dem die Abtriebswelle 13 über die Lager 32, 42, die Abtriebswelle 20 über die Lager 34, 41 , der Antriebsflansch 11 über die Lager 39 und die Vorgelegewelle 21 über die Lager 40 gelagert sind. Die Lager 32, 34, 41 , 42 sind als Kugelrollenlager ausgebildet, während die Lager 39 als Kegelrollenlager in einer O-Anordnung und die Lager 40 als Kegelrollenlager in einer X-Anordnung ausgebildet sind.

Die als Lamellenkupplung ausgeführte Trennkupplung 8 in Fig. 5 weist einen Außenlamellenträger 48, der über eine Welle-Nabe-Verbindung drehfest mit der Abtriebswelle 20 verbunden ist, und einen Innenlamellenträger 49 auf, der integral mit dem Rotorträger 16 der ersten elektrischen Maschine 4 ausgebildet ist.

## Patentansprüche

1. Antriebsstrang (1 ) für ein Hybridkraftfahrzeug, mit einer Getriebeeingangswelle (2), die über einen ersten Teilantriebsstrang (3) mit einer ersten elektrischen Maschine (4) und einer Verbrennungskraftmaschine (5) zur Drehmomentübertragung in Wirkbeziehung steht und die über einen zweiten Teilantriebsstrang (6) mit einer zweiten elektrischen Maschine (7) zur Drehmomentübertragung in Wirkbeziehung steht, die zweite elektrische Maschine (7) dauerhaft mit der Getriebeeingangswelle (2) drehmomentübertragend verbunden ist und die erste elektrische Maschine (4) und die Verbrennungskraftmaschine (5) koppelbar zur Drehmomentübertragung mit der Getriebeeingangswelle (2) verbindbar sind, wobei die erste elektrische Maschine (4) und die zweite elektrische Maschine (7) koaxial zueinander angeordnet sind, und wobei eine Abtriebswelle (13) der ersten elektrischen Maschine (4) radial innerhalb einer Abtriebswelle (20) der zweiten elektrischen Maschine (7) angeordnet ist **dadurch gekennzeichnet, dass** die Abtriebswelle (13) der ersten elektrischen Maschine (4) über ein Lager (36) auf der Abtriebswelle (20) der zweiten elektrischen Maschine (7) gelagert ist, wobei die erste elektrische Maschine (4) mit der Verbrennungskraftmaschine (5) drehmomentübertragend über eine erste Übersetzungsstufe (9) verbunden ist, wobei die erste Übersetzungsstufe (9) durch eine Verzahnung (10) an einem Antriebsflansch (11) der Verbrennungskraftmaschine (5) und eine Verzahnung (12) an der Abtriebswelle (13) der ersten elektrischen Maschine (4) ausgebildet ist, wobei die Verzahnung (10) des Antriebsflanschs (11) als ein innerverzahntes Hohlrad ausgebildet ist.

2. Antriebsstrang (1 ) nach Anspruch 1, **dadurch gekennzeichnet, dass** ein Rotor (17) der zweiten elektrischen Maschine (7) über ein erstes Lager (34) und ein zweites Lager (41) in dem Getriebegehäuse gelagert ist.

3. Antriebsstrang (1 ) nach einem der vorangegangenen Ansprüche , **dadurch gekennzeichnet, dass** eine schaltbare Kupplung (8) zwischen dem zweiten Teilantriebsstrang (6) mit der zweiten elektrischen Maschine (7) und dem ersten Teilantriebsstrang (3) mit der ersten elektrischen Maschine (4) und der Verbrennungskraftmaschine (5) angeordnet ist.

4. Antriebsstrang (1 ) nach einem der vorangegangenen Ansprüche, **dadurch gekennzeichnet, dass** nur eine Kupplung (8) in dem Antriebsstrang (1) angeordnet ist.

5. Antriebsstrang (1 ) nach einem der vorangegangenen Ansprüche, **dadurch gekennzeichnet, dass** die erste elektrische Maschine (4) dauerhaft mit der Verbrennungskraftmaschine (5) drehmomentübertragend verbunden ist.

6. Antriebsstrang (1 ) nach einem der vorangegangenen Ansprüche, **dadurch gekennzeichnet, dass** nur eine Übersetzungsstufe (9) zwischen der Verbrennungskraftmaschine (5) und der ersten elektrischen Maschine (4) ausgebildet ist.

7. Antriebsstrang (1 ) nach einem der vorangegangenen Ansprüche, **dadurch gekennzeichnet, dass** die erste elektrische Maschine (4) und die zweite elektrische Maschine (7) in Axialrichtung auf der einen Seite der Übersetzungsstufe (9) und die Verbrennungskraftmaschine (5) in Axialrichtung auf der anderen Seite der Übersetzungsstufe (9) angeordnet sind.

8. Antriebsstrang (1 ) nach einem der vorangegangenen Ansprüche, **dadurch gekennzeichnet, dass** der Antriebsstrang (1 ) so ausgebildet, dass ein Betrieb in einem ersten Betriebsmodus zum rein elektrischen Antreiben, in dem die Kupplung (8) geöffnet ist und nur die zweite elektrische Maschine (7) als Antriebsmaschine für die Getriebeeingangswelle (2) wirkt, und/oder in einem zweiten Betriebsmodus zum seriellen Hybridantrieb, in dem die Kupplung (8) geöffnet ist, die zweite elektrische Maschine (7) als Antriebsmaschine für die Getriebeeingangswelle (2) wirkt und die Verbrennungskraftmaschine (5) als Antriebsmaschine für die erste elektrische Maschine (4) zum Erzeugen elektrischer Energie wirkt, und/oder in einem dritten Betriebsmodus zum parallelen Hybridantrieb, in dem die Verbrennungskraftmaschine und zusätzlich die erste elektrische Maschine (4) und/oder die zweite elektrische Maschine (7) als Antriebsmaschine für die Getriebeeingangswelle (2) wirkt, ermöglicht ist.

## Claims

1. Drive train (1) for a hybrid motor vehicle, with a transmission input shaft (2) which is operatively connected via a first part drive train (3) to a first electric machine (4) and an internal combustion engine (5) for the transmission of torque, and which is operatively connected via a second part drive train (6) to a second electric machine (7) for the transmission of torque, the second electric machine (7) being connected permanently to the transmission input shaft (2) in a torque-transmitting manner, and it being possible for the first electric machine (4) and the internal combustion engine (5) to be connected couplably to the transmission input shaft (2) for the transmission of torque, the first electric machine (4) and the second electric machine (7) being arranged coaxially with respect to one another, and an output shaft (13) of the first electric machine (4) being arranged radially inside an output shaft (20) of the second electric machine (7), **characterized in that** the output shaft (13) of the first electric machine (4) is mounted via a bearing (36) on the output shaft (20) of the second electric machine (7), the first electric machine (4) being connected via a first transmission stage (9) in a torque-transmitting manner to the internal combustion engine (5), the first transmission stage (9) being configured by a toothing system (10) on a drive flange (11) of the internal combustion engine (5) and a toothing system (12) on the output shaft (13) of the first electric machine (4), the toothing system (10) of the drive flange (11) being configured as an internally toothed internal gear.

2. Drive train (1) according to Claim 1, **characterized in that** a rotor (17) of the second electric machine (7) is mounted via a first bearing (34) and a second bearing (41) in the transmission housing.

3. Drive train (1) according to either of the preceding claims, **characterized in that** a switchable clutch (8) is arranged between the second part drive train (6) with the second electric machine (7) and the first part drive train (3) with the first electric machine (4) and the internal combustion engine (5).

4. Drive train (1) according to one of the preceding claims, **characterized in that** only one clutch (8) is arranged in the drive train (1).

5. Drive train (1) according to one of the preceding claims, **characterized in that** the first electric machine (4) is connected permanently to the internal combustion engine (5) in a torque-transmitting manner.

6. Drive train (1) according to one of the preceding claims, **characterized in that** only one transmission stage (9) is configured between the internal combustion engine (5) and the first electric machine (4).

7. Drive train (1) according to one of the preceding claims, **characterized in that** the first electric machine (4) and the second electric machine (7) are arranged in the axial direction on the one side of the transmission stage (9), and the internal combustion engine (5) is arranged in the axial direction on the other side of the transmission stage (9).

8. Drive train (1) according to one of the preceding claims, **characterized in that** the drive train (1) is configured in such a way that operation in a first operating mode for purely electric driving, in which the clutch (8) is open and only the second electric machine (7) acts as a drive machine for the transmission input shaft (2), and/or in a second operating mode for serial hybrid drive, in which the clutch (8) is open, the second electric machine (7) acts as a drive machine for the transmission input shaft (2) and the internal combustion engine (5) acts as a drive machine for the first electric machine (4) for generating electric energy, and/or in a third operating mode for parallel hybrid drive, in which the internal combustion engine and additionally the first electric machine (4) and/or the second electric machine (7) act as a drive machine for the transmission input shaft (2), is made possible.

## Revendications

1. Chaîne cinématique (1) pour un véhicule automobile hybride, comprenant un arbre d'entrée de transmission (2) qui est en relation active pour la transmission de couple avec une première machine électrique (4) et un moteur à combustion interne (5) par l'intermédiaire d'une première chaîne cinématique partielle (3), et qui est en relation active pour la transmission de couple avec une deuxième machine électrique (7) par l'intermédiaire d'une deuxième chaîne cinématique partielle (6), la deuxième machine électrique (7) étant reliée de manière permanente à l'arbre d'entrée de transmission (2) en transmission de couple, et la première machine électrique (4) et le moteur à combustion interne (5) pouvant être reliés pour la transmission de couple par accouplement à l'arbre d'entrée de transmission (2), dans laquelle la première machine électrique (4) et la deuxième machine électrique (7) sont disposées coaxialement l'une par rapport à l'autre, et un arbre de sortie (13) de la première machine électrique (4) étant disposé radialement à l'intérieur d'un arbre de sortie (20) de la deuxième machine électrique (7),
**caractérisée en ce que** l'arbre de sortie (13) de la première machine électrique (4) est monté par l'intermédiaire d'un palier (36) sur l'arbre de sortie (20) de la deuxième machine électrique (7), la première machine électrique (4) étant reliée au moteur à combustion interne (5) en transmission de couple par l'intermédiaire d'un premier étage de transmission (9), le premier étage de transmission (9) étant réalisé par une denture (10) sur une bride d'entraînement (11) du moteur à combustion interne (5) et une denture (12) sur l'arbre de sortie (13) de la première machine électrique (4), la denture (10) de la bride d'entraînement (11) étant réalisée sous forme de roue à denture intérieure.

2. Chaîne cinématique (1) selon la revendication 1, **caractérisée en ce qu'**un rotor (17) de la deuxième machine électrique (7) est monté dans le carter de transmission par l'intermédiaire d'un premier palier (34) et d'un deuxième palier (41).

3. Chaîne cinématique (1) selon l'une quelconque des revendications précédentes, **caractérisée en ce qu'**un accouplement embrayable (8) est disposé entre la deuxième chaîne cinématique partielle (6) avec la deuxième machine électrique (7) et la première chaîne cinématique partielle (3) avec la première machine électrique (4) et le moteur à combustion interne (5).

4. Chaîne cinématique (1) selon l'une quelconque des revendications précédentes, **caractérisée en ce qu'**un seul accouplement (8) est disposé dans la chaîne cinématique (1).

5. Chaîne cinématique (1) selon l'une quelconque des revendications précédentes, **caractérisée en ce que** la première machine électrique (4) est reliée de façon permanente au moteur à combustion interne (5) en transmission de couple.

6. Chaîne cinématique (1) selon l'une quelconque des revendications précédentes, **caractérisée en ce qu'**un seul étage de transmission (9) est réalisé entre le moteur à combustion interne (5) et la première machine électrique (4).

7. Chaîne cinématique (1) selon l'une quelconque des revendications précédentes, **caractérisée en ce que** la première machine électrique (4) et la deuxième machine électrique (7) sont disposées dans la direction axiale d'un côté de l'étage de transmission (9), et le moteur à combustion interne (5) est disposé dans la direction axiale de l'autre côté de l'étage de transmission (9).

8. Chaîne cinématique (1) selon l'une quelconque des revendications précédentes, **caractérisée en ce que** la chaîne cinématique (1) est réalisée de façon à permettre un fonctionnement dans un premier mode pour un entraînement purement électrique dans lequel l'accouplement (8) est ouvert et seule la deuxième machine électrique (7) sert de machine d'entraînement pour l'arbre d'entrée de transmission (2), et/ou dans un deuxième mode pour l'entraînement hybride en série dans lequel l'accouplement (8) est ouvert, la deuxième machine électrique (7) sert de machine d'entraînement pour l'arbre d'entrée de transmission (2) et le moteur à combustion interne (5) sert de machine d'entraînement pour la première machine électrique (4) afin de produire de l'énergie électrique, et/ou dans un troisième mode pour l'entraînement hybride parallèle dans lequel le moteur à combustion interne et en plus la première machine électrique (4) et/ou la deuxième machine électrique (7) servent de machine d'entraînement pour l'arbre d'entrée de transmission (2) .
